(19) Europäisches Patentamt
European Patent Office
Office européen des brevets

(11) **EP 2 984 939 A1**

(12) **EUROPEAN PATENT APPLICATION**
published in accordance with Art. 153(4) EPC

(43) Date of publication:
**17.02.2016 Bulletin 2016/07**

(21) Application number: **14773902.3**

(22) Date of filing: **25.03.2014**

(51) Int Cl.:
**A23L 19/00** (2016.01)   **A01G 7/00** (2006.01)
**A01G 7/06** (2006.01)   **A23L 5/30** (2016.01)

(86) International application number:
**PCT/JP2014/058158**

(87) International publication number:
**WO 2014/157127 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2013   JP 2013064264**

(71) Applicant: **Fujifilm Corporation**
**Minato-ku**
**Tokyo 106-8620 (JP)**

(72) Inventors:
• **USAMI Yoshihisa**
**Ashigarakami-gun**
**Kanagawa 258-8577 (JP)**
• **ICHIHASHI Mitsuyoshi**
**Ashigarakami-gun**
**Kanagawa 258-8577 (JP)**
• **OKI Kazuhiro**
**Ashigarakami-gun**
**Kanagawa 258-8577 (JP)**
• **KAGAWA Hideaki**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

(54) **METHOD FOR PROCESSING PLANTS USING LIGHT, PRODUCTION METHOD, SHEET FOR PROCESSING PLANTS, AND ILLUMINATION DEVICE**

(57)   The present invention provides: a method for processing a plant which includes irradiating the plant with an ultraviolet ray predominantly including one of either a right-circularly polarized light component or a left-circularly polarized light component; a method for producing a plant including the above processing method; a sheet for use in the above processing method including a circularly polarized light selectively reflective layer that selectively reflects or transmits right-circularly polarized light or left-circularly polarized light in any wavelength region of an ultraviolet region; and an illumination device for use in the above processing method including a light source capable of radiating an ultraviolet ray and the above sheet. By the above processing method, in storage of plants or the like, the amount of a specific component in plants can be adjusted, which is useful for the production of plants.

EP 2 984 939 A1

**Description**

Technical Field

The present invention relates to a method for processing and a method for producing plants which use light. The present invention also relates to a sheet and an illumination device that can be used for a processing method of plants.

Background Art

A processing method of irradiating an agricultural product before or after harvesting with specific light for obtaining a specific effect such as accelerating the growth in cultivation or storage of agricultural products is known conventionally.

As the light, ultraviolet rays were considered to be light that gave a harmful influence such as accelerated deterioration, but, It has recently been reported that irradiation of agricultural products after harvesting with ultraviolet rays increases the content of a specific amino-acid constituent or catechin (Patent Literature 1 and 2). In Patent Literature 3, it is reported that the generation of anthocyanin contained abundantly in strawberry, broccoli etc. is accelerated by irradiation of ultraviolet rays together with red light in agricultural products after harvesting.

Regarding light in visible light region, polarized state thereof is considered to give occasionally a certain influence on growth etc. of plants (Patent Literature 4 and 5).

Citation List

Patent Literature

[Patent Literature 1] Japanese Patent Application Laid-Open No. 2011-067200
[Patent Literature 2] Japanese Patent Application Laid-Open No. 2012-055193
[Patent Literature 3] Japanese Patent Application Laid-Open No. 2008-071509
[Patent Literature 4] Japanese Patent Application Laid-Open No. 2008-228688
[Patent Literature 5] International Publication (WO) No. 2012-144422

Summary of Invention

An object of the present invention is to provide a method for processing plants using light, which is useful for processing, storage etc. of plants. Other objects of the present invention are to provide a method for producing plants using the processing method, and to provide a sheet and an illumination device that can be used for the processing method.

For solving the object, the inventors of the present invention have carried out experiments on the influence of light component of various wavelengths that is given to the growth, storage, etc. of plants. In the process, the inventors have found that a specific circular polarized light component of an ultraviolet ray increased the amount of a specific component in plants and, on the basis of the finding, furthermore conducted experiments to thereby complete the invention. The present invention thus provides [1] to [18] below.

[1] A method for processing a plant, which includes irradiating the plant with an ultraviolet ray predominantly containing one of either a right-circularly polarized light component or a left-circularly polarized light component.

[2] The processing method according to [1], wherein a circular polarization degree of the ultraviolet ray represented by the following formula is 0.2 or more:

$$\text{Circular polarization degree} = |I_R - I_L| / (I_R + I_L)$$

wherein, $I_R$ is intensity of a right-circularly polarized light component of light and $I_L$ is intensity of a left-circularly polarized light component.

[3] The processing method according to [2], wherein the circular polarization degree is 0.9 or more.

[4] The processing method according to any one of [1] to [3], wherein the plants are agricultural products and the irradiation is performed for the agricultural products after harvesting.

[5] The processing method according to any one of [1] to [4], wherein the irradiation is performed for fruits or flowers.

[6] The processing method according to any one of [1] to [4], wherein the irradiation is performed for grapes, berries, cherries, melons, peaches including plum, persimmons, apples, tangerines, pears, apricots or figs.

[7] The processing method according to [6], wherein the irradiation is performed for grapes, berries or cherries.

[8] The processing method according to any one of [1] to [7] for adjusting an amount of a specific component in plants.

[9] The processing method according to [8], wherein the specific component is flavonoid.

[10] The processing method according to [9], wherein the flavonoid is anthocyanin or catechin.

[11] The processing method according to [9], wherein the flavonoid is anthocyanin.

[12] The processing method according to any one of [1] to [11], wherein the irradiation is performed while disposing a light source, a filter containing a linear polarization plate and a $\lambda/4$ wavelength plate, and a plant in this order, and, in the irradiation, light radiated from the light source, after passing through the filter, is irradiated to the plant.

[13] The processing method according to any one of [1] to [11], wherein the irradiation is performed while disposing a light source, a plant, and a filter containing a linear polarization plate and a $\lambda/4$ wavelength plate in this order, and, in the irradiation, light reflected by the filter is irradiated to the plant.

[14] A method for processing a plant, which includes irradiating the plant with an ultraviolet ray dominantly containing a left-circularly polarized light component to thereby accelerate generation of one or more components in the plant.

[15] A method for producing a plant, including the processing method according to any one of [1] to [14].

[16] A sheet for use in the processing method according to any of [1] to [14], including a circularly polarized light selectively reflective layer that selectively reflects or transmits right-circularly polarized light or left-circularly polarized light in any wavelength region of an ultraviolet region.

[17] An illumination device for use in the processing method according to any one of [1] to [14], including a light source capable of radiating an ultraviolet ray, and a sheet containing a circularly polarized light selectively reflective layer that selectively reflects or transmits right-circularly polarized light or left-circularly polarized light in any wavelength region of the ultraviolet region.

[18] An illumination device for use in the processing method according to any one of [1] to [14], containing a light source capable of radiating an ultraviolet ray, a linear polarization plate and a $\lambda/4$ wavelength plate in this order.

Effect of the Invention

By the present invention, a method for processing plants, which is useful for processing, storage and the like of plants, and a sheet and illumination usable for the processing method are provided. By the processing method, in storage of plants or the like, the amount of a specific component in plants can be adjusted, which is useful for the production of plants.

Brief Description of Drawings

Fig. 1 is a drawing showing a configuration of an illumination system used in Examples.

Fig. 2 is a drawing showing the emission spectrum of a light source used in Examples.

Fig. 3 is a drawing showing change in diffuse reflectance of light having a wavelength of 600 nm regarding a grape used in Examples when right-circularly polarized light or left-circularly polarized light is irradiated.

Modes of Carrying Out Invention

Herein after, the present invention will be explained in detail.

Meanwhile, in the description, "to" is used in a sense that numerical values described before and after "to" are included as the lower limit and the upper limit, respectively.

In the method for processing plants of the present invention, irradiation of ultraviolet rays dominantly containing one of either right-circularly polarized light component or left-circularly polarized light component is included.

A polarized state of light can be represented by the sum of right-circularly polarized light and left-circularly polarized light. For example, when intensities (light amounts) of right- and left-circularly polarized components are equal to each other, the sum thereof results in linearly polarized light, and the electric vector thereof vibrates in the direction determined by the phase difference between the left-circularly polarized light and right-circularly polarized light. A case where intensities of a right-circularly polarized component and a left-circularly polarized component are different from each other results in elliptically polarized light, and a case where either component alone exists results in complete circularly polarized light.

Meaning of dominantly containing either right-circularly polarized light component or left-circularly polarized light component is that, in light, one circularly polarized light component has a larger light amount as compared with the other circularly polarized light component. Concretely, a circular polarization degree may be 0.2 or more, 0.4 or more, 0.6 or more, 0.80 or more, 0.9 or more, etc., and may be substantially 1.

Here, the circular polarization degree is a value represented by $|I_R - I_L|/(I_R + I_L)$, when denoting the intensity of right-circularly polarized light component of light by $I_R$ and denoting the intensity of left-circularly polarized light component of the light by $I_L$. In order to represent the ratio of circularly polarized light components of light, in the description, the circular polarization degree may be used.

Ultraviolet rays are electromagnetic waves lying in a wavelength region shorter than that of visible light and longer than that of X rays. The ultraviolet rays may be light lying in a wavelength region that can be distinguished from those of visible light and X rays, and are light lying, for example, in the wavelength region of 10 to 420 nm. As ultraviolet rays for use in the method of the present invention, the maximum wavelength lies preferably in the range of 200 to 410 nm, more preferably in the range of 250 to 400 nm, furthermore preferably in the range of 300 to 390 nm, and most preferably in the range of 320 to 380 nm.

In the light irradiation of the method of the present invention, light other than ultraviolet rays may or may not be irradiated at the same time. Examples of the light other than ultraviolet rays include light in the visible light region (420 to 700 nm) and light in the infrared light region (700 to 1200 nm). Upon light irradiation to plants, the light amount of light component in a range of 10 to 420 nm in wavelength may be, relative to the total light amount to be irradiated, for example, 40% or more, 50% or more, 60% or more, 70% or more, 80% or more, 90% or more, 95% or more, 99% or more, etc.

In the total light amount of light to be irradiated, light other than ultraviolet rays may be polarized light or unpolarized light. The unpolarized light contains right-circularly polarized light component and left-circularly polarized light component substantially in the same amount.

The polarized state at respective wavelengths of light can be measured using a spectral radiance meter or a spectrometer mounted with a circular polarization plate. In this case, the intensity of light measured through a right circular polarization plate corresponds to $I_R$, and the intensity of light measured through a left circular polarization plate corresponds to $I_L$. Further, ordinary light sources such as an incandescent light bulb, a mercury lamp, a fluorescent lamp and an LED radiate approximately natural light, and a feature of a polarization state control member for producing polarized light when being mounted on these can be measured, for example, using a polarized light phase difference-analyzing apparatus "AxoScan" manufactured by Axometrics, Inc., or the like.

Further, the polarized state can also be measured by attaching a circular polarization plate to an illuminometer or a light spectrometer. By attaching a right-circularly polarized light transmission plate and measuring a right-circularly polarized light amount, and by attaching a left-circularly polarized light transmission plate and measuring a left-circularly polarized light amount, the ratio can be measured.

<Light source>

The light source for light irradiation is not particularly limited. A light source that radiates only ultraviolet rays may be used. Alternatively, a light source of a wide wavelength region such as the sunlight may be used while using a wavelength selective filter for the irradiation of ultraviolet rays to thereby select and use only light in a necessary wavelength region. Further, a wavelength selective filter that converts the light from the light source to ultraviolet rays may be used, but, the utilization efficiency lowers, therefore, such a form, in which light of an emission wavelength is used as it is, is preferable.

Concrete examples of the light sources include an LED, discharge lamps such as a fluorescent lamp, a xenon lamp, a mercury lamp, a sodium lamp and a metal halide lamp, lamps using a filament such as a halogen lamp and an incandescent lamp, inorganic/ organic EL lamps, an electrodeless lamp, and the like. From the viewpoint of efficiency, an LED, discharge lamps, electrodeless lamp and organic EL lamp are preferable. An LED having the highest electricity - light efficiency is more preferable.

Light of a wavelength obtained by emission may be used as it is, or light converted by a fluorescent substance may be used.

Utilization of the sunlight is also possible.

<Polarization state control member>

In the method of the present invention, in order to radiate light dominantly containing either right-circularly polarized light component or left-circularly polarized light component, for example, a unit configured to change unpolarized light radiated from a light source to light dominantly containing either of circularly polarized light components may be used. As the unit, for example, the polarization state control member may be used. The polarization state control member is a member that controls the polarized state of incident light from a light source.

Here, "controls the polarized state of incident light from a light source" means to adjust the difference between the polarized state of light immediately after being radiated from the light source and the polarized state of light having passed through the polarization state control member.

A controlled wavelength band of the polarization state control member is not particularly limited, and may be, for example, broad as approximately 800 nm. Alternatively, at least one controlled wavelength band may be approximately 60 nm to 250 nm, or 80 nm to 200 nm.

Here, the controlled wavelength band can be measured, for example, with a polarized light phase difference-analyzing apparatus "AxoScan" manufactured by Axometrics, Inc., or the like.

The polarization state control member is not particularly limited, and a member that can reflect or transmit incident unpolarized light as an ultraviolet ray dominantly containing one of either right-circularly polarized light component or left-circularly polarized light component can be selected in accordance with a purpose. Examples thereof include a laminated body of a retardation film and a polarization plate (laminated body of a linear polarization plate and a $\lambda/4$ wavelength plate), a sheet containing a circularly polarized light selectively reflective layer, and the like.

In the method of the present invention, the polarization state control member may be used, for example, as a filter of an illumination device, an agricultural sheet, a storage bag for an agricultural product, or the like.

For example, an illumination device having a filter that functions as the polarization state control member with a light source (as to the configuration of the illumination device, International Publication No. 2012-44422 can be referred to) may be used, or the polarization state control member may be provided for an illumination device for unpolarized light to irradiate plants with the light. Alternatively, a sheet that functions as the polarization state control member may be disposed around plants to irradiate the plants with light via the sheet. Concretely, a form, in which an opening for taking in outside light of a house for plant cultivation, or a house or box for storing plants (windows, a ceiling, walls or side faces configured of a sheet) is configured of a sheet that functions as the polarization state control member, can be applied. Other examples include, a method of disposing a sheet that functions as the polarization state control member, in particular a sheet that functions as a circularly polarized light reflective plate on a ground of field cultivating plants (for example, a fruit farm) and performing cultivation utilizing the sunlight as usual, a method of disposing a sheet or plate that functions as a circularly polarized light reflective plate on a floor or wall of a storehouse, and the like.

(Laminated body of retardation film and polarization plate)

An example of the laminated body of a retardation film and a polarization plate include a laminated body of a linear polarization plate and a $\lambda/4$ wavelength plate. The linear polarization plate includes a reflective linear polarization plate and an absorptive linear polarization plate.

As to the kind and fabrication method of laminated bodies of the retardation film and the polarization plate, for example, description of International Publication No. 2012-44422 about a circular polarization plate and a circularly polarized light reflective plate may be referred to.

In addition to the reflective linear polarization plate described in International Publication No. 2012-44422, the linear polarization plate may be one consisting of a film formed by aligning and fixing in one direction dye having absorption anisotropy for a vibration direction of light. Such a film functions as an absorptive linear polarization plate that absorbs/intercepts light of vibration in the major axis direction of absorption, and that transmits light of vibration orthogonal to the direction. Generally, one obtained by causing a dichroic coloring material to be adsorbed and aligned to a uniaxially stretched polyvinyl alcohol-based resin film is known.

The film is usually manufactured through a step of dyeing a polyvinyl alcohol-based resin film with a dichroic coloring material and causing the dichroic coloring material to be adsorbed (a process of a dyeing processing), a step of processing the polyvinyl alcohol-based resin film to which the dichroic coloring material is adsorbed with an aqueous boric acid solution (a process of boric acid processing), and a step of water washing after the processing with an aqueous boric acid solution (a process of water washing processing).

Further, upon manufacturing a polarizing film, the polyvinyl alcohol-based resin film is subjected to uniaxial stretching, and the uniaxial stretching is performed before or after the step of dyeing processing, or before the step of a boric acid processing. Stretching ratio is, usually, approximately 3 to 8 times.

The dyeing of the polyvinyl alcohol-based resin film with a dichroic coloring material in the step of dyeing processing is performed, for example, by immersing the polyvinyl alcohol-based resin film in an aqueous solution containing the dichroic coloring material. As the dichroic coloring material, for example, iodine, a dichroic dye or the like can be used. Examples of the dichroic dye includes, for example, dichroic direct dyes consisting of a disazo compound, such as C. I. DIRECT RED 39, and dichroic direct dyes consisting of such compounds as trisazo or tetrakisazo.

The thickness of the polarizing film is, usually, in the range of 5 to 40 $\mu$m, and, usually, the manufacture is performed by sticking, respectively, a transparent resin film such as cellulose acylate to both faces of the polarizing film via an adhesive.

(Circularly polarized light selectively reflective layer)

A circularly polarized light selectively reflective layer means a layer that reflects one component of either right-circularly polarized light or left-circularly polarized light when light of a specific wavelength or in a specific wavelength region is irradiated. The other component may pass through the circularly polarized light selectively reflective layer or may be absorbed. Light of other wavelength regions may pass or be absorbed. There may be one or two or more of the specific wavelength or specific wavelength region at least in the wavelength region of ultraviolet rays (a wavelength region of 10 to 400 nm width lying in the range of 10 nm to 420 nm). A specific wavelength region showing circularly polarized light selective reflection may additionally exist in wavelength regions other than the region of ultraviolet rays.

The circularly polarized light selectively reflective layer is not particularly limited as far as it has the above-described function. Preferable examples thereof include a layer formed from a composition containing a liquid crystalline compound and a chiral compound. Further, as the circularly polarized light selectively reflective layer, particularly a layer having a cholesteric liquid crystal structure can preferably be used. The circularly polarized light selectively reflective layer may be manufactured, by referring to the description in International Publication No. 2012-44422 regarding a circularly polarized light reflective plate having a cholesteric liquid crystal structure, the description in Japanese Patent Application Laid-Open No. 2007-20439 regarding a wavelength selectively reflective layer, the description in Japanese Patent Application Laid-Open No. 2007-155942 regarding an optically anisotropic layer, the description in Japanese Patent Application Laid-Open No. 2010-286643 regarding an optically reflective layer, and the description in Japanese Patent Application Laid-Open No. 2004-309597 and Japanese Patent Application Laid-Open No. 2007-233376 regarding a liquid crystalline compound, such that a wavelength region showing circularly polarized light selective reflection lies at least in a wavelength region of ultraviolet rays.

In order to adjust a wavelength showing circularly polarized light selective reflection to lie in a wavelength region of ultraviolet rays, it is necessary to set the pitch of a helical structure of a cholesteric liquid crystal to be 300 nm or less. For that purpose, preferably, a mixing amount of a chiral compound can be increased, or a chiral compound having a larger twist force can be used. Further, the use of a polymerizable liquid crystal compound or a chiral compound that itself has a light absorption peak of 300 nm or less for forming a layer having a cholesteric liquid crystal structure is preferable in point of enhancing the effect of a circularly polarized light reflectance and improving the light durability of the film itself. When plural cholesteric layers are used, a layer having a reflection wavelength in an ultraviolet region is preferably formed on the side nearer to a light source as compared with other cholesteric layers from the viewpoint of the durability of cholesteric layers.

When forming a layer having a cholesteric liquid crystal structure, if an alignment processing is not performed, the helical axis of the cholesteric liquid crystal inclines in a part of the layer surface to thereby generate haze, and, therefore, a method of providing an alignment layer on a base material and, after that, performing an alignment processing such as a rubbing processing is common. Although the use of the method is possible, the layer may be formed by applying a cholesteric liquid crystal application liquid to the alignment layer without performing an alignment processing, or may be formed by directly applying a cholesteric liquid crystal application liquid to a base material without forming an alignment layer. As the result of the examination of present inventors, it was found that, in the latter method, haze was generated, but that the circular polarization degree of reflected light was kept high and light scattering caused by the haze reduced unevenness of the reflected light. A similar effect can also be obtained by setting an adjustment angle on the air interface side of a pretilt angle adjustment agent added to a cholesteric liquid crystal application liquid to be in the range of 5 degrees to 30 degrees by using the adjustment agent having an asymmetric molecular structure.

(Examples of configuration of polarization state control member)

Specific examples of the configurations of the polarization state control member include configurations of (2-a) to (2-c) below:

> (2-a) a circularly polarized light selectively reflective layer;
> (2-b) a laminated body of a $\lambda/4$ wavelength plate and a reflective linear polarization plate (to be used while setting the reflective linear polarization plate on a light source side, and the $\lambda/4$ wavelength plate on the side opposite to the light source); and
> (2-c) a laminated body of $\lambda/4$ wavelength plate and an absorptive linear polarization plate (to be used while setting the absorptive linear polarization plate on a light source side, and the $\lambda/4$ wavelength plate on the side opposite to the light source).

<Irradiation conditions>

Irradiation of light is preferably performed with light of above a certain intensity of light for above a certain period of time. The reason is because the irradiation of light is usually performed for accelerating some sort of reaction in plants such as a reaction of generating a specific component in plants.

The intensity of light may be 0.01 to 200 W/cm$^2$, preferably 0.1 to 20, 1 to 10 W/cm$^2$, although it depends on the state of plants such as before harvesting or after harvesting. Irradiation time may be 0.1 to 300 hours, 1 to 300 hours, 10 to 100 hours, or the like. The light irradiation according to the present invention may be performed substantially over a cultivation period.

<Distance between light source and plants, etc.>

The distance between the light source and plants is not particularly limited. For example, when setting the distance to be about 10 cm, while using a typical LED with output power of 1 W, for an area equivalent to that of a square with twenty-centimeter sides, irradiation with intensity of light of 2.5 mW/cm$^2$ (1000 mW/400 cm$^2$) is possible. Since distribution of light irradiation exists, preferably another light source is disposed adjacently so that the light irradiation regions are overlapped each other to thereby wholly inhibit the generation of unevenness of intensity of light. It is intended to reduce the unevenness of light amount by compensating the lowering of light amount, which is caused by the increase in distance from the radiation direction of the light source, with the light from the adjacent light source.

<Plants>

Plants to be irradiated with the light in the method of the present invention may be those before harvesting or those after harvesting. The object of the light irradiation may be the whole of a plant or a part of a plant. Examples of the parts include flowers, fruits, stems, leaves and roots, and a combination thereof. In particular, plants for ornamental use or food can be objects for the light irradiation.

The kind of plants to be processed by the method of present invention is not particularly limited. Concretely, grapes (Akiqueen, Akiseedless, Alphonse Lavallee, Adirondack, Izunishiki, Izumoqueen, Italia, Itchkimar, Ueharo540, Urbana, Wink, Ogyoku, Olympia, Kaiji, Kattaqo'rg'on, Cannon Hall Muscat, Kaiotome, Campbell Early, Campbell, Kyoho, King Delaware, Green Summer, Kourgan Rose, Konigin der Weingarten, Koshusanjaku, Koshu, Gold, Gold Finger, Gorby, Sagami, Zabalkanskii, Sunny Rouge, Shigyoku, C. G. 88435, Citronelle, Shinano Smile, Jasmine, Steuben, Suiho, Seibel 9110, Sekirei, Cecilia, SetoGiants Seneca, Centennial, Takao, Takasumi, Takatsuma, Tamayutaka, TanoRed, Daigyokuro, Sana, Jingzaojing, Delaware, Tenshu, Niagara, 70168, Newni, New York Muscat, Neomato, Neo Muscat, Neheresukoru, North Black, North Red, High Berry, Violet Uehara, Hakuho, Buffalo (Early Steuben), Honey Black, Honey Seedless, Baladi, Venus, Pione, Pittelo Bianco, Himrod Seedless, Fujiminori, Black Opus, Black Olympia, Black Sanjaku, Flame Tokay, Fredonia, Beijigan, Beni Alexandria, Beniizu, Benikanazawa, Benisanjaku, Benizuiho, Benitamaki, Beninanyo, Benifuji, Beniyamabiko, Beniyoshi, Portland, Manaizi, Muscat of Alexandria, Muscat Kofu, Muscat Hamburg, Muscat Biore, Muscat Berry A, Mario, Mirei, Morgen Shoen, Yatomi Rosa, Unicorn, Rizamat, Rich Baba, Ryugan, Ryuhou, Ryogyoku, Rubel Muscat, Ruby Okubo, Ruby Okuyama, Red Queen, Red port, Lord Berry, Royal, Rozaki, Rosario Bianco, Rosario Rosso, etc.), berries (strawberry, blueberry, raspberry, blackberry, and cranberry, etc.), cherries (Satonishiki, Takasago, Benishuho, Nanyo, Napoleon, Gassan-nishiki, American cherry, etc.), melons (Earl's favorite, Yubari melon, Rupia Red, Andes melon, Higo Green, Quincy melon, Amus melon, Takami melon, Takami Red, Honeydew, Kinsho melon, Home-run melon, Elizabeth melon, Papaya melon, Korean melon, etc.), peaches including plums (Hanayome, Chiyohime, Hakuho, Reiho, Akatsuki, Ogonto, Kawanakajima hakuto, Seto hakuto, Yuzora, Soldum, Kiyo, Summer Angel, Santa Rosa, Beniryozen, Summer Angel, Akihime, Prien, Nectarine, etc.), persimmons (Shinshu, Fudegaki, Nishimurawase, Soshu, Izu, Jiro, Aishuho, Taishu, Yohogaki, Fuyu, Hanagosho, shibugaki, Tonewase, Yotsumizo, Saijogaki, Koshuhyakume, Fujigaki, Ichidagaki, Edogaki, Hiratanenashi, Tsurunokogaki, Atago, Yokonogaki, etc.), apples (Akane, Akibae, Korin, Jonagold, Fuji, Senshu, Suntsugaru, Tsugaru, Youko, Starking Delicious, Kogyoku, Alps Otome, Himeringo, Shinanosweet, Hokuto, Mutsu, Kotoku, Pinklady, Tsugaruhime, Ryoka, BeniShogun, Sekaiichi, Sansa, Redgold, Himekami, Shinsekai, Kokko, Orin, Ogyoku, Toki, Shinanogold, Gunmameigetsu, Kinsei, Sunkinsei, etc.), mandarin oranges (Unshu mandarin orange, Iyokan, Hassaku, Buntan, Banpeiyu, Sanbokan, Dekopon, Tangerine, Daidai, Kinkan, Orange, Grapefruit, Lemon, Lime, Yuzu, Cabos, Sudachi, Ponkan, Kiyomi, Setoka, Harumi, Murcott, Mineola, Seminole, Angkor, Amanatsu, Hyuganatsu, Cocktail fruit, etc.), pears (Kosui, Chikusui, Shinsui, Jakko, Shuei, Nijusseiki, Hosui, Niitaka, Nansui, Akizuki, Echigonishiki, Kamonashi, Okusankichi, Shinko, Shinsetus, Atago, La France, Rurekuche, General Leclerc, Brandy Wine, Bartlett, Aurora, Silver Bell, Doyenne du Cornice, Marguerite marillat, etc.), apricots, figs, prunes, Lonicera caerulea, acai, mulberry, eggplant, bell peppers, tomatoes, red cabbage, purple sweet potato, Beniimo, red onion, red perilla, blue perilla, broccoli, black rice, black beans, red beans, black sesame, camellia, roses, stock, hydrangea, and the like.

In the present description, the light irradiation may be performed before harvesting plants, or after harvesting plants or in storage thereof. For example, it may be performed in cultivating plants, in between immediately after harvesting of plants and shipping, in transportation, in selling, in storage in a storage cabinet, refrigerator or the like by consumers.

The method of the present invention may be performed, in particular, for adjustment of the amount or adjustment of the coloring of specific component in plants. Examples of the specific components include a component of a coloring matter and a component of nutrient. Specific examples include flavonoid coloring matters such as anthocyanin, catechin and the like.

Examples

Hereinafter, Examples and Comparative examples will be mentioned and features of the present invention will be explained furthermore concretely. Materials, use amount, ratio, processing content, processing procedure or the like can be changed appropriately only when the change does not bring about the deviation from the purport of the present invention. Accordingly, the scope of the present invention should not be construed in a limited manner based on specific examples shown below.

[Example 1: application to plants after harvesting]

<Fabrication of illumination device (illumination system)>

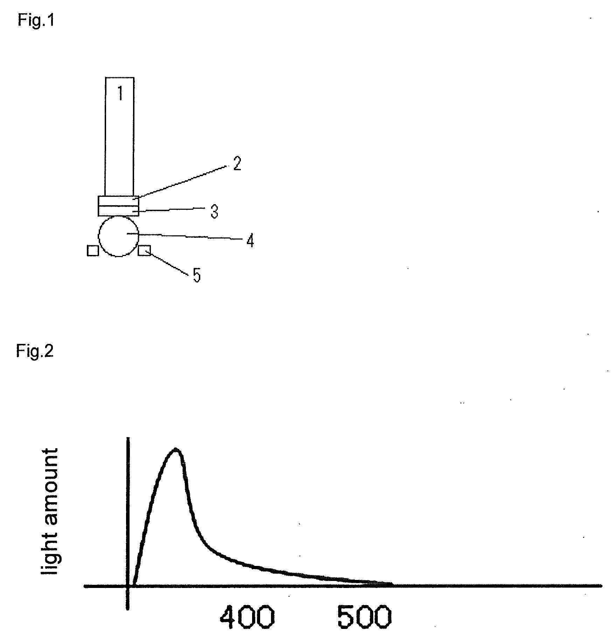

A lamp below as a light source and a filter below as a polarization state control member were prepared respectively and were disposed as shown in Fig. 1, and the polarization axis of the polarization plate and the slow axis of the retardation film were adjusted (referring to "Optical engineering 1" (first edition, published by MORIKITA PUBLISHING Co., Ltd.)) to thereby set a disposition capable of forming light dominantly containing one of either right-circularly polarized light component or left-circularly polarized light component.
(UV-LED lamp) UV mini light, manufactured by Eishin Kagaku Co., Ltd. (mainly containing light of wavelength of 350 to 390 nm: refer to Fig. 2)
(Filter)
Wire grid polarization plate: manufactured by Edmund Optics, ultra broad band wire grid polarization filter
Retardation film: manufactured by Edmund Optics, quartz wavelength plate zero, $1/4\lambda$ (design wavelength of 355 nm)

<Plant>

Grape (Pione) harvested in Otsuka Grape Farm (88 Fukudagaya, Aoi-ku, Shizuoka city, Shizuoka) in September Heisei 24 (2012) was used. It was stored under refrigeration and experiment was performed in day after next.

<Irradiation processing>

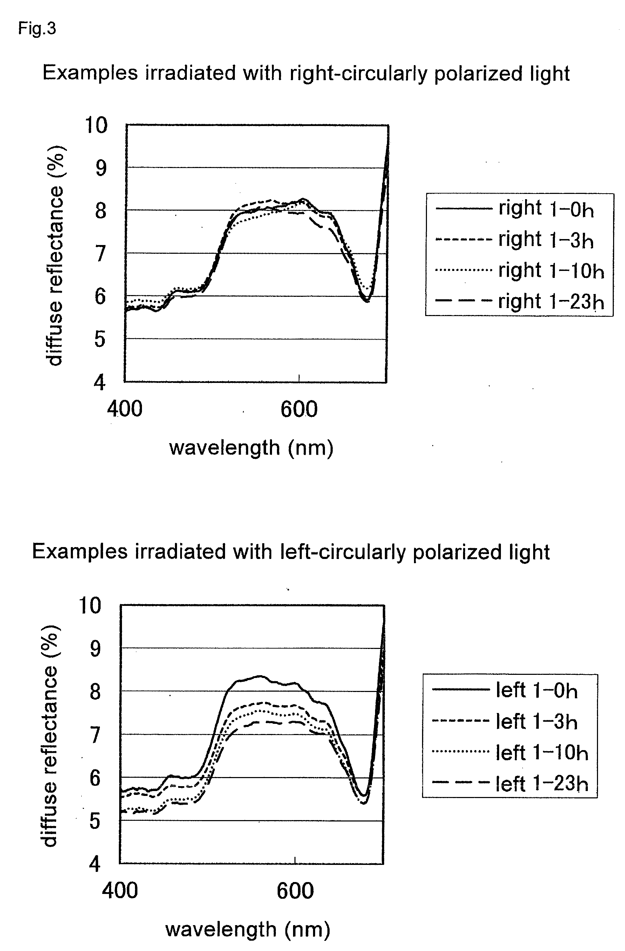

In the processing, the circular polarization degree of the illumination system was 0.9 in right-circularly polarized light, and 0.9 in left-circularly polarized light (measurement wavelength was 365 nm). The measurement for calculating the circular polarization degree was performed, in the above-described system, by measuring the amount of circularly polarized light at a position of the plant to be irradiated. To a spectrophotometer (Model: USB2000, manufactured by Ocean Optics Corporation), a circular polarization plate was mounted and measurement was performed plural times at respective wavelengths while changing an incident angle of light.
The irradiation of linearly polarized light was performed in the above-described illumination system after removing the retardation film. The irradiation of non-polarized light was performed in the above-described illumination system after removing the polarization plate and the retardation film, and using a dark filter (ND filter) so that the light amount (total light amount independent from the polarized state) became the same as that in the irradiation of the linearly polarized light.
Meanwhile, the irradiation was performed in a dark room so as not to be influenced by other light.
Before performing the irradiation, diffuse reflectance of the plant at a wavelength of 600 nm was measured with a spectrophotometer (V-550, manufactured by Jasco Corporation).
After that, the diffuse reflectance (%) was also measured 3 hours later, 10 hours later and 23 hours later. Further, based on measured values, optical density was checked by a calculation formula below. Results are shown in Table 1 and Fig. 3.

$$(\text{Optical density}) = -\log_{10}[1 / (\text{diffuse reflectance})]$$

[Table 1]

| irradiation time | 0 | 3 | 10 | 23 | |
|---|---|---|---|---|---|
| | diffuse reflectance | | | | |
| left-circularly polarized light | 8.2 | 7.7 | 7.4 | 7.3 | |
| right-circularly polarized light | 8.2 | 8.1 | 8.0 | 8.0 | |
| non-polarized light | 8.2 | 8 | 7.9 | 7.9 | |
| linearly polarized light | 8.2 | 8.1 | 7.9 | 7.9 | |
| | optical density | | | | increased ratio of active substance |
| left-circularly polarized light | 0.086 | 0.114 | 0.131 | 0.137 | 1.59 |
| right-circularly polarized light | 0.086 | 0.092 | 0.097 | 0.097 | 1.12 |
| non-polarized light | 0.086 | 0.097 | 0.102 | 0.102 | 1.19 |
| linearly polarized light | 0.086 | 0.092 | 0.102 | 0.102 | 1.19 |

As demonstrated in Fig. 3 and Table 1, examples irradiated with left-circularly polarized light showed large lowering of the reflectance. It is considered that flavonoid such as anthocyanin increased and the absorption of light increased. Further, examples irradiated with non-polarized light or linearly polarized light, the reflectance lowered only slightly as compared with examples irradiated with right-circularly polarized light. It is presumed that the effect by the left-circularly polarized light component in the non-polarized light or linearly polarized light is suppressed by the right-circularly polarized light component.

Key to the Numbers

[0061]

1: lamp
2: polarization plate
3: retardation film
4: grape
5: fixing jig

**Claims**

1. A method for processing a plant, which comprises irradiating the plant with an ultraviolet ray predominantly comprising one of either a right-circularly polarized light component or a left-circularly polarized light component.

2. The processing method according to claim 1, wherein a circular polarization degree of the ultraviolet ray represented by the following formula is 0.2 or more:

$$\text{Circular polarization degree} = |I_R - I_L| / (I_R + I_L)$$

wherein $I_R$ is intensity of a right-circularly polarized light component of light and $I_L$ is intensity of a left-circularly polarized light component.

3. The processing method according to claim 2, wherein the circular polarization degree is 0.9 or more.

4. The processing method according to any one of claim 1 to 3, wherein the plants are agricultural products and the irradiation is performed for the agricultural products after harvesting.

**5.** The processing method according to any one of claim 1 to 4, wherein the irradiation is performed for fruits or flowers.

**6.** The processing method according to any one of claim 1 to 4, wherein the irradiation is performed for grapes, berries, cherries, melons, peaches comprising plum, persimmons, apples, tangerines, pears, apricots or figs.

**7.** The processing method according to claim 6, wherein the irradiation is performed for grapes, berries or cherries.

**8.** The processing method according to any one of claim 1 to 7 for adjusting an amount of a specific component in plants.

**9.** The processing method according to claim 8, wherein the specific component is flavonoid.

**10.** The processing method according to claim 9, wherein the flavonoid is anthocyanin or catechin.

**11.** The processing method according to claim 9, wherein the flavonoid is anthocyanin.

**12.** The processing method according to any one of claim 1 to 11, wherein the irradiation is performed while disposing a light source, a filter comprising a linear polarization plate and a λ/4 wavelength plate, and a plant in this order, and, in the irradiation, light radiated from the light source, after passing through the filter, is irradiated to the plant.

**13.** The processing method according to any one of claim 1 to 11, wherein the irradiation is performed while disposing a light source, a plant, and a filter comprising a linear polarization plate and a λ/4 wavelength plate in this order, and, in the irradiation, light reflected by the filter is irradiated to the plant.

**14.** A method for processing a plant, which comprises irradiating the plant with an ultraviolet ray dominantly comprising a left-circularly polarized light component to thereby accelerate generation of one or more components in the plant.

**15.** A method for producing a plant, comprising the processing method according to any one of claim 1 to 14.

**16.** A sheet for use in the processing method according to any of claim 1 to 14, comprising a circularly polarized light selectively reflective layer that selectively reflects or transmits right-circularly polarized light or left-circularly polarized light in any wavelength region of an ultraviolet region.

**17.** An illumination device for use in the processing method according to any one of claim 1 to 14, comprising a light source capable of radiating an ultraviolet ray, and a sheet comprising a circularly polarized light selectively reflective layer that selectively reflects or transmits right-circularly polarized light or left-circularly polarized light in any wavelength region of the ultraviolet region.

**18.** An illumination device for use in the processing method according to any one of claim 1 to 14, comprising a light source capable of radiating an ultraviolet ray, a linear polarization plate and a λ/4 wavelength plate in this order.

Fig.1

Fig.2

Fig.3

## Examples irradiated with right-circularly polarized light

Legend:
— right 1-0h
------- right 1-3h
········ right 1-10h
— — — right 1-23h

## Examples irradiated with left-circularly polarized light

Legend:
— left 1-0h
------- left 1-3h
········ left 1-10h
— — — left 1-23h

**EP 2 984 939 A1**

## INTERNATIONAL SEARCH REPORT

| International application No. |
|---|
| PCT/JP2014/058158 |

**A. CLASSIFICATION OF SUBJECT MATTER**
*A23L1/212*(2006.01)i, *A01G7/00*(2006.01)i, *A01G7/06*(2006.01)i, *A23L1/025* (2006.01)i

According to International Patent Classification (IPC) or to both national classification and IPC

**B. FIELDS SEARCHED**

Minimum documentation searched (classification system followed by classification symbols)
A23L1/212, A01G7/00, A01G7/06, A23L1/025

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho  1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2012/144422 A1 (Fujifilm Corp.),<br>26 October 2012 (26.10.2012),<br>paragraphs [0013], [0071] to [0077]; examples 1 to 6<br>& JP 2012-226229 A | 1-3,5-12,<br>14-18<br>4,13 |
| Y | JP 2008-71509 A (Matsushita Electric Industrial Co., Ltd.),<br>27 March 2008 (27.03.2008),<br>paragraphs [0054], [0055]<br>(Family: none) | 4 |
| Y | JP 2012-55193 A (Kikkoman Corp.),<br>22 March 2012 (22.03.2012),<br>paragraphs [0039] to [0041]<br>(Family: none) | 4 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>26 May, 2014 (26.05.14) | Date of mailing of the international search report<br>03 June, 2014 (03.06.14) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2014/058158

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-67200 A (Hidetoshi AOKI),<br>07 April 2011 (07.04.2011),<br>paragraph [0016]<br>(Family: none) | 4 |
| Y | JP 2007-20439 A (Fujifilm Holdings Corp.),<br>01 February 2007 (01.02.2007),<br>paragraphs [0002], [0003], [0011] to [0019],<br>[0065]<br>(Family: none) | 13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011067200 A
- JP 2012055193 A
- JP 2008071509 A
- JP 2008228688 A
- WO 2012144422 A
- WO 201244422 A

- JP 2012044422 A
- JP 2007020439 A
- JP 2007155942 A
- JP 2010286643 A
- JP 2004309597 A
- JP 2007233376 A

**Non-patent literature cited in the description**

- Optical engineering 1. MORIKITA PUBLISHING Co., Ltd,